# EUROPÄISCHE PATENTANMELDUNG

(11) **EP 0 625 439 A1**
(43) Veröffentlichungstag der Anmeldung: **23.11.1994**
(21) Anmeldenummer: 94100791.6
(22) Anmeldetag: 20.01.1994
(51) Int. Cl.: B60F 1/00

(54) **Mehrwege-Fahrzeug für das Befahren von Strassen- und Schienenwegen**

(30) Priorität: 18.05.1993 DE 4316631
(71) Anmelder: Firma ZWEIWEG SCHNEIDER GmbH & Co. KG, D-83022 Rosenheim (DE)
(72) Erfinder: Bittermann, Richard, Dipl.-Ing. (FH), D-83024 Rosenheim (DE); Kerschner, Engelbert, D-42799 Leichlingen (DE); Fritz, Michael, Dipl.-Ing., D-42655 Solingen (DE)
(74) Vertreter: Puschmann, Heinz H.

(57) **Zusammenfassung**

Als Mehrwege-Fahrzeug ausgebildetes Straßenfahrzeug (MF) für das Befahren von Straßen- und Schienenwegen mittels luftbereifter Räder (R1-R4), denen aus einer Ruhe- in eine Arbeitslage beweglich gelagerte Führungseinrichtungen (FE) zugeordnet sind, die bei Schienenfahrt des Fahrzeuges die Führung bewirkende mit Spurkränzen versehene Führungsrollen (42, 43) aufweisen, die nach Art eines Drehgestells ausgebildet und jeweils um eine zum Schienenweg (SW) etwa senkrechte, die Mitte der zugeordneten Radachse (22) durchstroßenden Achse (Z) an der zugeordneten Radachse (22) drehbeweglich gelagert sind.

## Beschreibung

Die Erfindung betrifft ein Straßenfahrzeug für das Befahren von Straßen- und Schienenwegen mittels luftbereifter Räder, mit für die Vorder- und Hinterräder am Fahrzeug aus einer Ruhe- in eine Arbeitslage beweglich gelagerten Führungseinrichtungen, die bei Schienenfahrt des Fahrzeuges die Führung bewirkende mit Spurkränzen versehene Führungsrollen aufweisen.

Solche Mehrwege-Fahrzeuge, die für den Straßen- und Schienenbetrieb gleich gut einsetzbar sind, haben sich seit langem in hohem Maße bewährt und gewährleisten einen äußerst kostengünstigen Betrieb beim Umschlag von zu transportierenden Gütern und beim Rangierbetrieb. Infolge des hohen Reibungskoeffizienten zwischen den luftbereiften Rädern und den Schienen können mit solchen gegenüber Lokomotiven üblicher Bauart leichten und wohlfeilen Mehrwege-Fahrzeugen erhebliche Lasten gezogen oder geschoben werden.

Für das Führen solcher Straßenfahrzeug längs eines Schienenweges ist es bekannt, bei zweiachsigen Straßenfahrzeugen die Führungseinrichtungen vor bzw. hinter den Fahrzeugachsen anzuordnen, wie dies die DE-PS 17 80 059 und die DE-PS 19 13 878 zeigen; während bei mehrachsigen Straßenfahrzeugen mit einer Vorderachse und einer hinteren Zwillingsachse die Führungseinrichtungen vor der Vorderachse und zwischen den Zwillingsachsen angeordnet sind, wie dies die DE-PS 32 03 426 zeigt.

Allen diesen Führungseinrichtungen ist gemeinsam, daß nach dem Einspuren der Führungseinrichtungen des Straßenfahrzeuges in die Schienenspur sich bei Durchfahren eines Schienenbogens bezüglich des zentralen Reifenaufstandspunkts ein Reifenversatz ergibt. Je nach Schienenbogenradius und Radstand des Straßenfahrzeuges ist dieser Reifenversatz größer oder kleiner und verursacht ein Abrutschen eines oder mehrerer der luftbereiften Räder des Straßenfahrzeuges von den Schienen, insbesondere bei engen Kurven, was den Einsatz solcher Straßenfahrzeuge einengt.

Es besteht aber Bedarf für eine Erweiterung der Einsatzmöglichkeit von Mehrwege-Fahrzeugen, um diese unabhängig von ihrem Radstand auch auf Gleisanlagen einsetzen zu können, die relativ enge Kurvenradien aufweisen.

Aufgabe der Erfindung ist es, hier Abhilfe zu schaffen durch eine solche Ausbildung und Anordnung der Führungseinrichtung, daß unabhängig vom Radstand des als Mehrwege-Fahrzeug auszubildenden handelsüblichen Straßenfahrzeuges der Reifenversatz während der Schienenführung auf ein Maß reduziert wird, das das Durchfahren auch von engen Schienenbögen gefahrlos erlaubt.

Ausgehend von einem Straßenfahrzeug der eingangs genannten Art ist die Aufgabe gemäß der Erfindung durch die Merkmale des kennzeichnenden Teils des Patentanspruches 1 gelöst.

Weitere vorteilhafte Ausgestaltungen der Erfindung ergeben sich aus den Unteransprüchen.

Infolge der erfindungsgemäßen drehbeweglichen Ausbildung der Führungseinrichtungen und deren mittiger Anordnung an den Fahrzeugachsen - ähnlich den aus dem Waggonbau bekannten Drehgestellen - wird das durch die Führungseinrichtungen auf den Schienen geführte Straßenfahrzeug auch bei engen Kurvenradien derart auf den zugeordneten Schienen gehalten, daß der auftretende Reifenversatz gegenüber den bekannten Führungseinrichtungen wesentlich reduziert wird.

Die Erfindung ist nachfolgend anhand mehrerer in der Zeichnung mehr oder minder schematisch dargestellter Ausführungsbeispiele beschrieben.

Es zeigen:
- Figur 1: die geometrischen Verhältnisse von schienengeführten Rädern eines Mehrwege-Fahrzeuges mit Führungseinrichtungen nach dem Stande der Technik beim Durchfahren eines Schienenbogens,
- Figur 2: die geometrischen Verhältnisse von schienengeführten Rädern eines Mehrwege-Fahrzeuges mit Führungseinrichtungen nach der Erfindung beim Durchfahren eines Schienenbogens,
- Figur 3: eine im Bereich der vertikalen Drehachse geschnittene Ansicht auf den Radbereich eines Mehrwege-Fahrzeuges mit jeweils einerseits am Fahrzeugrahmen und andererseits an Schwenkarmen der erfindungsgemäßen Führungseinrichtung gelenkig gelagerten Stellmitteln,
- Figur 4: den Radbereich eines Mehrwege-Fahrzeuges nach Figur 3 mit jeweils einerseits an einer Konsole und andererseits an Schwenkarmen jeweils gelenkig gelagerten Stellmitteln und
- Figur 5: den Radbereich eines Mehrwege-Fahrzeuges nach Figur 3 mit jeweils zwischen Schwenkarmen gelenkig gelagerten Stellmitteln.

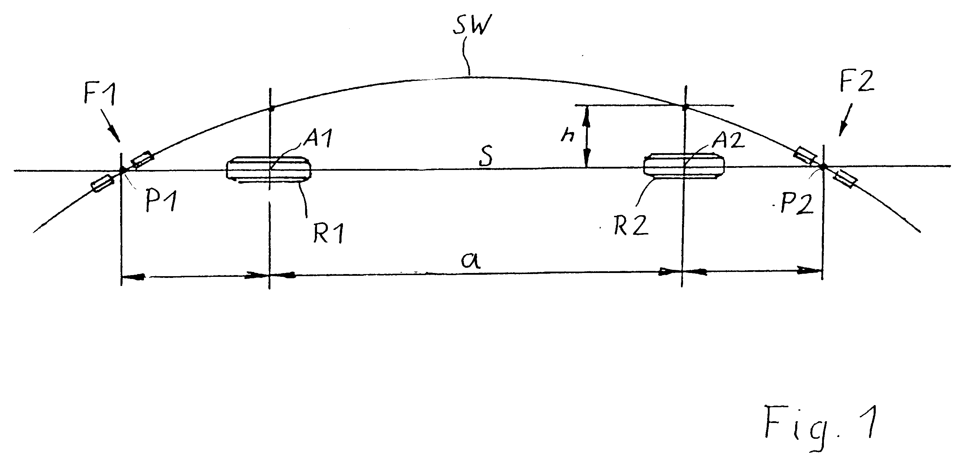

Wie die Figur 1 zeigt, entsteht beim Durchfahren des Bogens eines Schienenweges SW ein Reifenversatz h in bezug auf eine einerseits durch die von den vor und hinter der Fahrzeugachse liegenden Führungseinrichtungen F1 und F2 auf dem Schienenweg SW liegenden Schnittpunkte P1 und P2 und andererseits durch die Radaufstandspunkte A1 und A2 der luftbereiften Räder R1 und R2 verlaufende Sehne S.

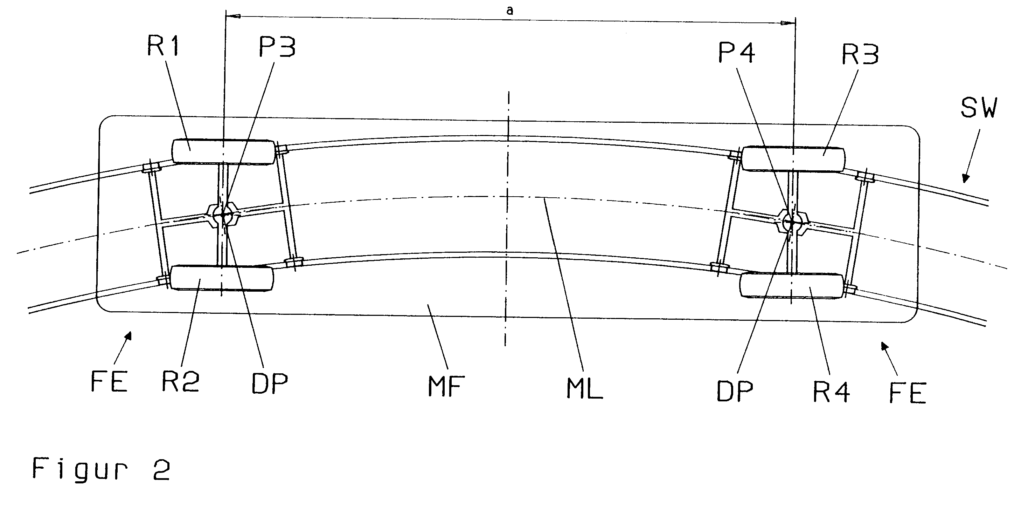

Um diesen Reifenversatz zu minimieren geht die Erfindung von der Erkenntnis aus, daß sich der Reifenversatz h dann reduzieren läßt, wenn jeweils in den Schnittpunkten P3 und P4 der aus der Mittellinie ML eines Schienenweges SW einerseits und dem Achsabstand a eines als Mehrwege-Fahrzeug MF dienenden Straßenfahrzeuges andererseits auf einer zur Ebene des Schienenweges SW annähernd senkrechten Achse Z jeweils ein Drehpunkt DP einer jeden Radachse zugeordnet wird, um die den Rädern R1, R2, R3, R4 zugeordneten vor- und nacheilenden Führungsrollen einer jeden Führungseinrichtung FE drehbeweglich lagern zu können, wie dies die Figur 2 veranschaulicht.

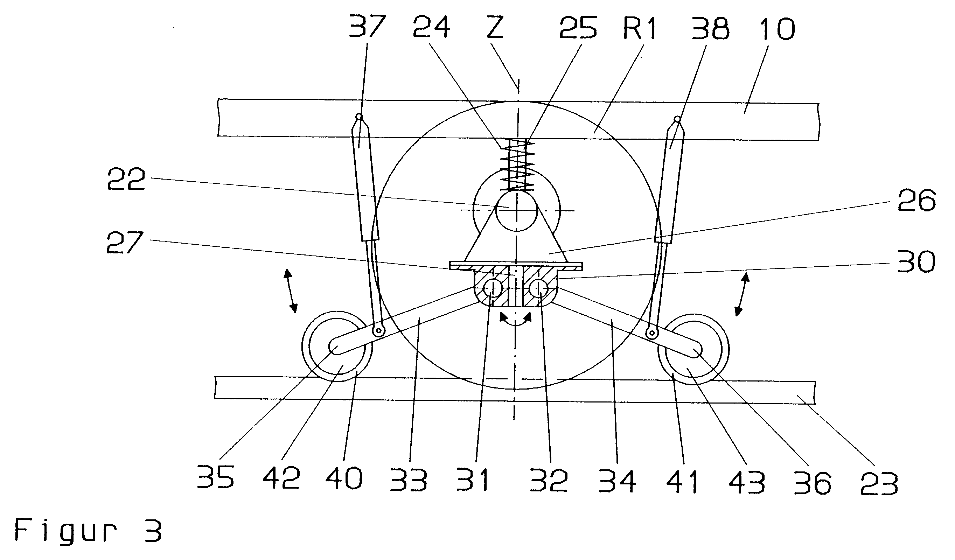

In Figur 3 ist eine erste Ausführungsform einer solchen Führungseinrichtung FE für die Fahrzeugräder einer Achse in dem in die Arbeitsstellung eingerückten Zustand dargestellt.

Ein Rad R1 einer Radachse 22 eines nicht näher dargestellten Straßenfahrzeuges MF steht auf einer Schiene 23 eines Schienenweges SW. Die Radachse 22 selbst ist mittels Federn 24 und Dämpfern 25 in üblicher Weise mit dem Fahrzeugrahmen 10 des Straßenfahrzeuges MF verbunden. Mittig zur Radachse 22 ist eine Konsole 26 vorgesehen, die annähernd parallel zu einer gedachten parallel zum Schienenweg SW liegenden Ebene angeordnet und mit der Radachse 22 verbunden ist. Auf der Konsole 26 ist ein um einen Drehzapfen 27 drehbeweglich gelagerter Schwenkarmträger 30 angeordnet, an den über Schwenkarm-Achsen 31 und 32 Schwenkarme 33 und 34 angelenkt sind. Die Schwenkarme 33 und 34 tragen an ihren dem Schwenkarmträger 30 abgewandten Ende Führungsrollen-Achsen 35 und 36, auf denen die jeweils mit einem Spurkranz 40 und 41 versehenen Führungsrollen 42 und 43 drehbar gelagert sind. Die Schwenkarme 33 und 34 sind über mit dem Fahrzeugrahmen 10 des Mehrwege-Fahrzeuges MF verbundenen und mittels an ihren Enden gelenkig gelagerten Stellmitteln 37 und 38 vorzugsweise Hydraulikzylindern aus ihrer Ruhestellung in ihre Arbeitsstellung ein- und in die Ruhestellung ausrückbar.

Die der hier nicht dargestellten weiteren Radachse des Straßenfahrzeuges zugeordnete Führungseinrichtung entspricht der vorstehend beschriebenen Führungseinrichtung.

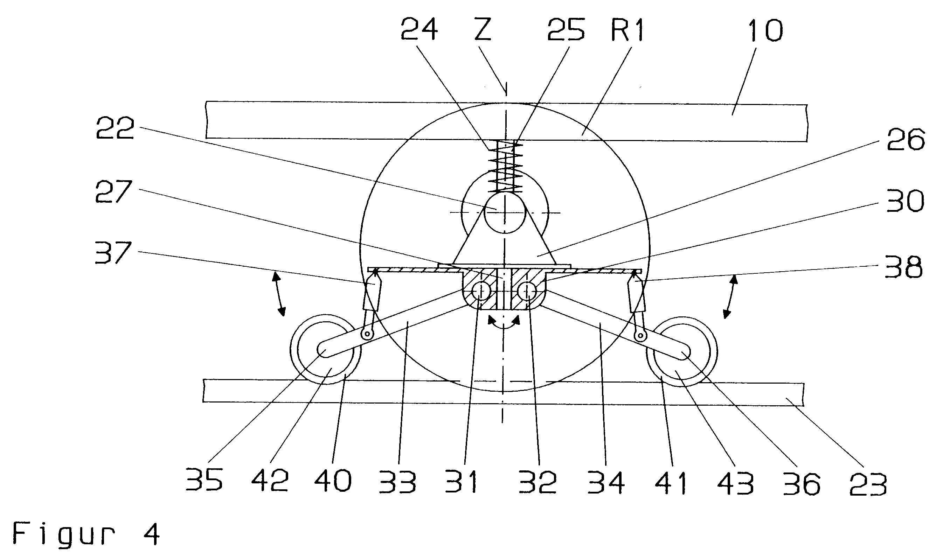

Bei dem in Figur 4 gezeigten weiteren Ausführungsbeispiel - das gleiche Bezugsziffern für einander entsprechende Bauteile aufweist - sind die Schwenkarme 33 und 34 mit dem um den Drehzapfen 27 drehbar gelagerten, aus einer Ruhestellung in eine Arbeitsstellung und vice versa einrückbaren Schwenkarmträger 30 über an ihren Enden gelenkig gelagerte Stellmittel 37 und 38 verbunden.

Bei dieser Anordnung ist die aus dem Schwenkarmträger 30, den Schwenkarmen 33 und 34 sowie den Führungsrollen 42 und 43 bestehende Führungseinrichtung FE von Relativbewegungen des Straßenfahrzeuges schwingungsmäßig entkoppelt.

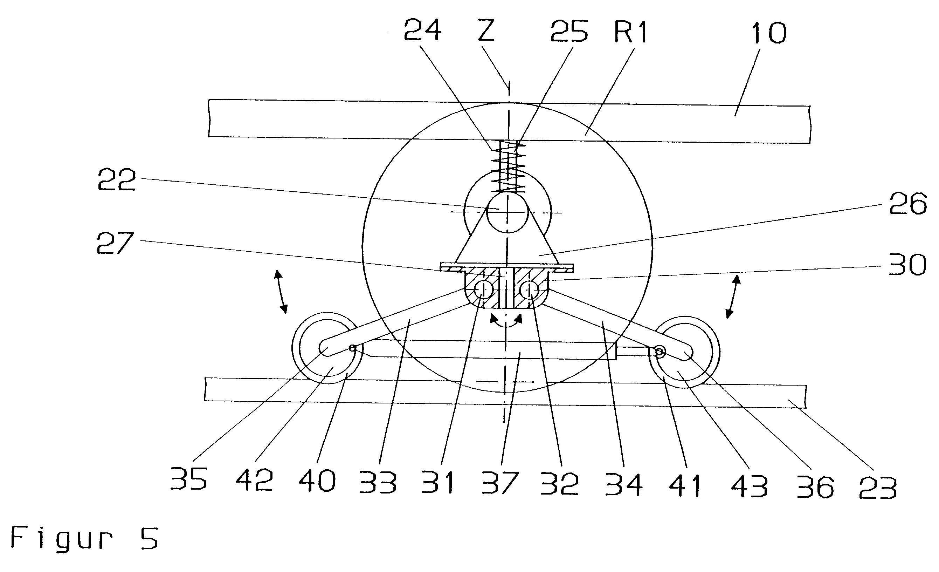

Bei einem weiteren Ausführungsbeispiel gemäß Figur 5 - das ebenfalls gleiche Bezugsziffern für einander entsprechende Bauteile aufweist -, ist die Anordnung so getroffen, daß das Straßenfahrzeug MF und die Führungseinrichtung FE schwingungsmäßig entkoppelt ist, und mit nur einem Stellmittel 37 je Radseite der Radachse 22 die Einrück- bzw. Ausrückbewegung bewirkt wird, wobei die Lagerpunkte des Stellmittels 37 jeweils an den Schwenkarmen 33 und 34 im Bereich der Führungsrollen 42 und 43 angeordnet sind.

Bei allen verstehend beschriebenen Ausführungsformen wird die Konsole 30 bei in die Ruhelage geschwenkten Schwenkarmen 33, 34 in einer Mittelstellung zentriert gelagert gehalten.

Ferner ist allen vorstehend beschriebenen Ausführungsformen gemeinsam, daß der Reifenversatz h der luftbereiften Räder R1, R2, R3 und R4 erfindungsgemäß durch die drehgestellähnliche, den Radachsen 22 mittig um die vertikale Achse Z drehgelenkig zugeordnete Anordnung der in die Arbeitslage eingeführten Führungseinrichtungen FE auch beim Durchfahren enger Schienenbögen auf ein Minimum reduziert wird, und dadurch die luftbereiften Räder des Straßenfahrzeuges MF immer sicher auf den Schienenköpfen des Schienenweges SW aufliegen.

## Patentansprüche

1. Straßenfahrzeug für das Befahren von Straßen- und Schienenwegen mittels luftbereifter Räder, mit für die Vorder- und Hinterräder am Fahrzeug aus einer Ruhe- in eine Arbeitslage beweglich gelagerten Führungseinrichtung, die bei Schienenfahrt des Fahrzeuges die Führung bewirkende mit Spurkränzen versehene Führungsrollen aufweisen, **dadurch gekennzeichnet, daß** die Führungseinrichtungen (FE) nach Art eines Drehgestells ausgebildet und jeweils um eine zum Schienenweg (SW) etwa senkrechte, die Mitte der zugeordneten Radachse (22) durchstoßenden Achse (Z) an der zugeordneten Radachse (22) drehbeweglich gelagert sind.

2. Straßenfahrzeug nach Anspruch 1, **dadurch gekennzeichnet, daß** in der Mitte einer jeden Radachse (22) eine einen Lagerzapfen (27) aufweisende Konsole (26) angeordnet ist und jeder Konsole (26) ein um den Lagerzapfen (27) drehbeweglich gelagerter Schwenkarmträger (30) zugeordnet ist, mit dem Schwenkarme (33, 34) gelenkig verbunden sind, an deren dem Schwenkarmträgern (30) abgewandten Enden die den luftbereiften Rädern (R1-R4) zugeordneten Führungsrollen (42, 43) auf Führungsrollen-Achsen (35, 36) drehbar gelagert angeordnet sind, und daß die Schwenkarme (33, 34) durch Stellmittel (37, 38) aus einer Ruhe- in eine Arbeitslage und zurück verschwenkbar sind.

3. Straßenfahrzeug nach den Ansprüchen 1 und 2, **dadurch gekennzeichnet, daß** die Stellmittel (37, 38) einerseits schwenkarmseitig im Bereich der Führungsrollen-Achsen (35, 36) und andererseits jeweils am Fahrzeugrahmen (10) und/oder am Schwenkarmträger (30) gelenkig gelagert sind.

4. Straßenfahrzeug nach den Ansprüchen 1 bis 3, **dadurch gekennzeichnet, daß** jeder Führungseinrichtung (FE) ein Stellmittel (37) zugeordnet ist, das mit seinen beiden Enden jeweils im Bereich der Führungsrollen-Achse (35, 36) gelenkig gelagert ist.

5. Straßenfahrzeug nach den Ansprüchen 1 bis 4, **dadurch gekennzeichnet, daß** jede Konsole (30) der Führungseinrichtung (FE) bei in die Ruhelage geschwenkten Schwenkarmen (33, 34) in einer Mittelstellung zentriert gelagert gehalten ist.
